(19) **Europäisches Patentamt**
**European Patent Office**
**Office européen des brevets**

(11) **EP 4 095 947 A1**

(12) **EUROPEAN PATENT APPLICATION**
published in accordance with Art. 153(4) EPC

(43) Date of publication:
**30.11.2022 Bulletin 2022/48**

(51) International Patent Classification (IPC):
**H01M 4/36** (2006.01)        **H01M 4/38** (2006.01)
**H01M 4/48** (2010.01)        **H01M 4/587** (2010.01)
**H01M 4/62** (2006.01)        **H01M 10/052** (2010.01)
**C01B 33/02** (2006.01)      **C01B 33/113** (2006.01)

(21) Application number: **21744429.8**

(22) Date of filing: **19.01.2021**

(52) Cooperative Patent Classification (CPC):
**C01B 32/158; C01B 32/182; C01B 33/02;
C01B 33/113; C01B 33/22; H01M 4/36; H01M 4/38;
H01M 4/48; H01M 4/587; H01M 4/62;
H01M 10/052;** Y02E 60/10

(86) International application number:
**PCT/KR2021/000734**

(87) International publication number:
**WO 2021/149996 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2020 KR 20200007776**

(71) Applicant: **Daejoo Electronic Materials Co., Ltd.
Siheung-si, Gyeonggi-do 15094 (KR)**

(72) Inventors:
• **LEE, Eorang
  Siheung-si, Gyeonggi-do 15094 (KR)**
• **PARK, Heonsoo
  Siheung-si, Gyeonggi-do 15094 (KR)**
• **LIM, Sung Woo
  Siheung-si, Gyeonggi-do 15094 (KR)**
• **OH, Seung Min
  Siheung-si, Gyeonggi-do 15094 (KR)**
• **LIM, Jong Chan
  Siheung-si, Gyeonggi-do 15094 (KR)**

(74) Representative: **HGF
HGF Limited
1 City Walk
Leeds LS11 9DX (GB)**

(54) **SILICON-SILICON COMPOSITE OXIDE-CARBON COMPOSITE, METHOD FOR PREPARING SAME, AND NEGATIVE ELECTRODE ACTIVE MATERIAL COMPRISING SAME**

(57)    The present invention provides a silicon-silicon composite oxide-carbon composite, a method for preparing same, and a negative electrode active material for a lithium secondary battery, comprising same. More particularly, the silicon-silicon composite oxide-carbon composite of the present invention has a core-shell structure wherein the core comprises silicon, a silicon oxide compound, and magnesium silicate, and the shell comprises a carbon layer. In addition, by having a specific range of span values through the adjustment of particle size distribution of the composite, when used as a negative electrode active material of a secondary battery, the composite can improve not only the capacity of the secondary battery but also the cycle characteristics and initial efficiency thereof.

[Fig. 1]

EP 4 095 947 A1

## Description

### Technical Field

The present invention relates to a silicon-silicon complex oxide-carbon composite, to a method for preparing the same, and to a negative electrode active material comprising the same for a lithium secondary battery.

### Background Art

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well the application thereof to large electronic devices such as automobiles and power storage systems, is being actively conducted.

Carbon materials are widely used as a negative electrode active material of such a lithium secondary battery. Silicon-based negative electrode active materials are being studied in order to further enhance the capacity of batteries. Since the theoretical capacity of silicon (4,199 mAh/g) is greater than that of graphite (372 mAh/g) by 10 times or more, a significant enhancement in the battery capacity is expected.

However, when silicon is used as a main raw material as a negative electrode active material, the negative electrode active material expands or contracts during charging and discharging, and cracks may be formed on the surface or inside of the negative electrode active material. As a result, the reaction area of the negative electrode active material increases, the decomposition reaction of the electrolyte takes place, and a film is formed due to the decomposition product of the electrolyte during the decomposition reaction, which may cause a problem in that the cycle characteristics are deteriorated when it is applied to a secondary battery. Thus, attempts have continued to solve this problem.

Specifically, Japanese Laid-open Patent Publication No. 2002-042806 discloses a negative electrode active material comprising a carbon layer on the surface of silicon oxide particles in order to achieve high battery capacity and safety of a secondary battery. However, although the negative electrode active material may increase the charge and discharge capacity and the energy density of a secondary battery, it may have insufficient cycle characteristics or may have difficulties in achieving an energy density that satisfies market requirements.

Japanese Patent No. 5406799 discloses a method for preparing a silicon-silicon oxide composite containing magnesium or calcium by reacting carbon-coated silicon oxide powder with magnesium hydride ($MgH_2$) or calcium hydride (CaH2) in order to reduce the irreversible reaction of silicon dioxide. In this method, the amount of oxygen is reduced during the reaction of silicon oxide powder with $MgH_2$ or $CaH_2$. However, the silicon crystallite size rapidly grows due to a local exothermic reaction, and magnesium or calcium may be unevenly distributed, leading to a problem in that the specific capacity retention rate of silicon oxide is deteriorated.

Japanese Laid-open Patent Publication No. 2014-67713 discloses a composite negative electrode active material having a core-shell structure, which comprises a shell comprising a hollow carbon fiber and a core disposed in the hollow of the hollow carbon fiber, wherein the core comprises a first metal nanostructure and a method for preparing the same.

In addition, Japanese Laid-Open Patent Publication No. 2013-41826 discloses a negative electrode active material comprising first silicon oxide ($SiO_x$, wherein $0 < x < 2$) and second silicon oxide ($SiO_y$, wherein $0 < y < 2$) having a smaller particle diameter (D90) than that of the first silicon oxide, wherein the area ratio of the peak of the first silicon oxide to that of the second silicon oxide in a particle size distribution is 3 to 8.

Japanese Laid-Open Patent Publication No. 2015-164139 discloses a negative electrode active material as a powder having a cumulative 90% diameter ($D_{90}$) of 50 $\mu$m or less in a particle size distribution by laser diffraction scattering particle size distribution measurement and comprising fine powder A having a particle diameter of 2 $\mu$m or more and fine powder B having a particle diameter of less than 2 $\mu$m in which the fine powder A is silicon oxide and the fine powder B is silicon oxide.

However, although these prior art references relate to a negative electrode active material comprising silicon and carbon, or a negative electrode active material in which the particle size distribution of silicon oxide is adjusted, there is still a limit in simultaneously enhancing the capacity, cycle characteristics, and initial efficiency of a secondary battery.

[Prior art documents]

[Patent documents]

(Patent Document 1) Japanese Laid-open Patent Publication No. 2002-042806
(Patent Document 2) Japanese Patent No. 5406799
(Patent Document 3) Japanese Laid-open Patent Publication No. 2014-67713
(Patent Document 4) Japanese Laid-open Patent Publication No. 2013-41826
(Patent Document 5) Japanese Laid-open Patent Publication No. 2015-164139

## Detailed Description of the Invention

### Technical Problem

An object of the present invention is to solve the problems of the prior art and to provide a silicon-silicon complex oxide-carbon composite for a negative electrode active material of a lithium secondary battery, which can enhance not only the capacity but also the cycle characteristics and initial efficiency of a secondary battery.

Another object of the present invention is to provide a method for preparing the silicon-silicon complex oxide-carbon composite.

Still another object of the present invention is to provide a negative electrode active material and a lithium secondary battery comprising the same, each of which comprises the silicon-silicon complex oxide-carbon composite.

### Solution to the Problem

The present invention provides a silicon-silicon complex oxide-carbon composite having a core-shell structure, wherein the core comprises silicon, a silicon oxide compound, and magnesium silicate, the shell comprises a carbon layer, and when the particle size at which the cumulative volume concentration (%) in a particle size distribution is 10%, 50%, and 90% is D10, D50, and D90, respectively, the span value of the following Equation 1 of the composite is 0.6 to 1.5:

$$[\text{Equation 1}]$$
$$\text{Span} = (D90 - D10)/D50$$

In addition, the present invention provides a method for preparing a silicon-silicon complex oxide-carbon composite, which comprises a first step of preparing a raw material obtained by using a silicon powder and a silicon oxide ($SiO_x$ ($0.5 \leq x \leq 2$) powder; a second step of heating and evaporating the raw material and metallic magnesium at different temperatures, followed by deposition and cooling thereof to obtain a silicon-silicon composite oxide composite as a core; a third step of pulverizing and classifying the silicon-silicon composite oxide composite to an average particle diameter of 0.5 $\mu$m to 10 $\mu$m to obtain a silicon-silicon composite oxide composite powder; a fourth step of forming a carbon layer on the surface of the silicon-silicon composite oxide composite powder by using a chemical thermal decomposition deposition method to obtain a composite having a core-shell structure; and a fifth step of subjecting the composite having a core-shell structure to at least one step of pulverization and classification to obtain a silicon-silicon complex oxide-carbon composite.

In addition, the present invention provides a negative electrode active material comprising the silicon-silicon complex oxide-carbon composite.

Further, the present invention provides a lithium secondary battery comprising the negative electrode active material.

### Advantageous Effects of the Invention

The silicon-silicon complex oxide-carbon composite according to the embodiment has a core-shell structure, wherein the core comprises silicon, a silicon oxide compound, and magnesium silicate, the shell comprises a carbon layer, and the particle size distribution of the composite is adjusted to satisfy the span value of Equation 1 in a specific range. Thus, when it is used as a negative electrode active material of a secondary battery, it is possible to enhance not only the capacity but also the cycle characteristics and initial efficiency of the secondary battery.

### Brief Description of the Drawing

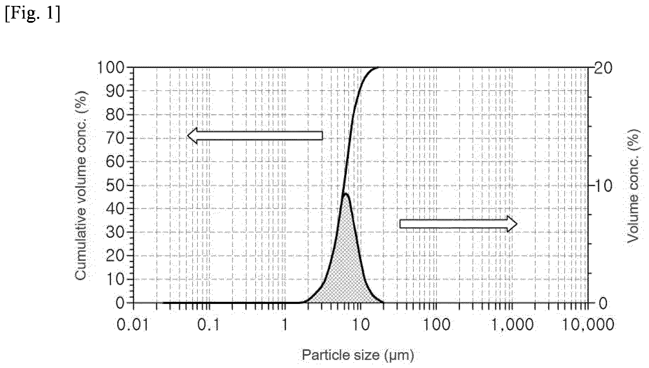

Fig. 1 is a graph showing the result of measuring the particle size distribution of the silicon-silicon complex oxide-carbon composite of Example 1.

**Best Mode for Carrying out the Invention**

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about," unless otherwise indicated.

In the present specification, D10 is a value measured as a particle diameter at which the cumulative volume concentration (%) is 10% in particle size distribution measurement according to a laser beam diffraction method.

In the present specification, D50 is a value measured as a particle diameter at which the cumulative volume concentration (%) is 50% in particle size distribution measurement according to a laser beam diffraction method.

In the present specification, D90 is a value measured as a particle diameter at which the cumulative volume concentration (%) is 90% in particle size distribution measurement according to a laser beam diffraction method.

Hereinafter, the present invention will be described in detail.

**[Silicon-silicon complex oxide-carbon composite]**

The silicon-silicon complex oxide-carbon composite (hereinafter, the "present composite") according to an embodiment of the present invention has a core-shell structure, wherein the core comprises silicon, a silicon oxide compound, and magnesium silicate, the shell comprises a carbon layer, and when the particle size at which the cumulative volume concentration (%) in a particle size distribution is 10%, 50%, and 90% is D10, D50, and D90, respectively, the span value of the following Equation 1 of the composite is 0.6 to 1.5.

$$[\text{Equation 1}]$$

$$\text{Span} = (D90 - D10)/D50$$

The span value of Equation 1 is an index indicating the distribution (particle size distribution) ratio to the particle size of the present composite. That is, it relates to the proportion of particles of different particle diameters. If the composition ratio of particles smaller than the average particle diameter and particles larger than the average particle diameter is high, it has a value larger than 1. If a composite is composed of particles of the same size only, the span value is 1.

In addition, the smaller the span value of Equation 1, the narrower the particle size distribution.

The present composite may have a span value of Equation 1 of 0.6 to 1.3 or 0.8 to 1.1. If the span value of the present composite according to an embodiment of the present invention satisfies the above range, the viscoelasticity of a negative electrode active material composition (negative electrode slurry) prepared by using the present composite, a binder, and a conductive material together would be good, so that the performance of a secondary battery can be enhanced.

Specifically, when a negative electrode active material composition is applied on a current collector, for example, a copper thin film, an appropriate level of viscoelasticity must be obtained to prepare a negative electrode having a uniform coating amount. If the span value of Equation 1 is satisfied as in the present composite, an appropriate level of viscoelasticity of the negative electrode active material can be achieved. As a result, it is possible to prepare a negative electrode having a uniform coating amount, thereby preventing a fire of the secondary battery due to overcharging, which significantly contributes to the enhancement of stability of the secondary battery. In addition, since the density of a dry film obtained by applying the negative electrode active material composition can be enhanced, it is possible to achieve a negative electrode having a structure that is hardly destroyed by contraction and expansion during charging and discharging of a secondary battery.

In addition, if the span value of Equation 1 satisfies the above range, it is possible to obtain a particle size distribution having a narrow base of a powder having a larger particle diameter and a smaller particle diameter than the average particle diameter of the composite. In addition, a particle size distribution close to left-right symmetry can be obtained. If the span value of Equation 1 is less than 0.6, the volume cumulative distribution curve of the present composite has a very sharp shape. The density of a dried film obtained by applying the negative electrode active material composition may be lowered, the capacity per unit volume of the secondary battery may be reduced, and its cycle characteristics may be reduced.

According to an embodiment of the present invention, the present composite may have a D10 of 0.7 $\mu$m to 4.0 $\mu$m, 1.0 $\mu$m to 4.0 $\mu$m, or 2.0 $\mu$m to 3.5 $\mu$m.

If D10 of the present composite satisfies the above range, the content of fine powder of the composite is appropriate. Thus, when it is applied to a negative electrode of a secondary battery, the viscosity of a negative electrode slurry comprising the negative electrode active material may have viscoelasticity for ready coating. In such a case, when the charge and discharge cycle of the secondary battery is repeated, the capacity retention rate is enhanced. In addition, fine particles having a small particle size among the negative electrode active material particles particularly become a contact point between the negative electrode active material particles, which produces the effect of enhancing electrical conductivity and lithium detachability.

According to an embodiment of the present invention, the present composite may have a D50 of 0.5 $\mu$m to 10.0 $\mu$m, 1.0 $\mu$m to 8.0 $\mu$m, or 3.0 $\mu$m to 7.0 $\mu$m.

If D50 of the present composite is within the above range, it is easy to occlude and release lithium ions during charging and discharging, thereby reducing particle breakage. If D50 is 0.5 $\mu$m or more, the surface area per unit weight may be reduced, and an increase in the irreversible capacity of a secondary battery may be suppressed. In addition, the BET specific surface area can be made sufficiently small, thereby avoiding any adverse impact by the BET specific surface area that would become too large. In addition, if D50 is 10.0 $\mu$m or less, the negative electrode active material is readily applied in the preparation of a negative electrode, which may be advantageous in terms of the process. In addition, if D50 is controlled within the above range, when the present composite is used as a negative electrode active material, uniform contraction and expansion can be secured, thereby enhancing the cycle characteristics and initial efficiency of the secondary battery.

If D50 exceeds 10.0 $\mu$m, the expansion of the composite particles due to the charging of lithium ions becomes severe, and the binding capability between the particles of the composite and the binding capability between the particles and the current collector are deteriorated as charging and discharging are repeated, so that the lifespan characteristics may be significantly reduced. In addition, there is a concern that the activity may be deteriorated due to a significant decrease in the specific surface area. If D50 is less than 0.5 $\mu$m, there is a concern that the dispersibility may be deteriorated due to the aggregation of the composite particles in the preparation of a negative electrode active material composition using the same.

According to an embodiment of the present invention, the present composite may have a D90 of 3.0 $\mu$m to 12.0 $\mu$m, 4.0 $\mu$m to 12.0 $\mu$m, or 4.0 $\mu$m to 10.0 $\mu$m.

If D90 of the present composite satisfies the above range, it is possible to prevent the destruction of the conduction path due to contraction and expansion during charging and discharging of the secondary battery. In addition, since the present composite does not contain excessively large particles, the lifespan characteristics of the secondary battery can be enhanced.

If D90 exceeds 12.0 $\mu$m, excessively large particles are present in the present composite, which may undesirably cause a risk of damaging the separation membrane. On the other hand, if D90 is less than 3.0 $\mu$m, there may be a problem in that the packing density of the negative electrode of the secondary battery is lowered.

In addition, according to an embodiment of the present invention, the ranges of D10 and D90 of the present composite may each be close to the range of D50. In such a case, the particle size distribution becomes narrow, so that it is easy to control the particle size of the powder of the present composite, and the composite prepared may have a powder having a low agglomeration level.

Meanwhile, the present composite may have a D90/D10 of 1.0 to 5.0. Specifically, D90/D10 of the present composite may be 2.0 to 4.5, specifically, 2.0 to 4.2 or 2.0 to 4.1. If D90/D10 is within the above range, the viscoelasticity of a negative electrode active material composition (negative electrode slurry) prepared by using the present composite, a binder, and a conductive material together would be good, so that the performance of a secondary battery can be enhanced.

In addition, according to an embodiment of the present invention, the present composite may have a Dmin of 0.1 to 3.0 $\mu$m, 0.2 to 2.2 $\mu$m, or 0.2 to 2.0 $\mu$m. Dmin is a value measured as a particle size (particle diameter) at which the cumulative volume concentration is the minimum, for example, $D_{0.01}$ in particle size distribution measurement according to a laser beam diffraction method.

In addition, the present composite may have a Dmax of 6.0 to 25 $\mu$m, 7 to 22 $\mu$m, or 7.45 to 21.9 $\mu$m. Dmax is a value measured as a particle diameter at which the cumulative volume concentration is the maximum, for example, $D_{99.9}$ in particle size distribution measurement according to a laser beam diffraction method.

If Dmin and Dmax each satisfy the above ranges, there may be advantages in that the packing density of the negative electrode active material of a secondary battery is maximized, and the printing characteristics of the negative electrode slurry, that is, the thickness uniformity of the coating film when applied on a current collector, continuous printing workability, and the like are excellent.

In addition, the ratio of the difference between Dmax and Dmin to D50 ((Dmax - Dmin)/D50) may be 2.0 to 5.0, 2.0 to 4.0, or 2.2 to 3.7. The ratio of the difference between Dmax and Dmin to D50 indicates the content ratio of fine powder and coarse particles. If it is outside the above range, there may be a problem in that a uniform coating film cannot be obtained due to poor coating workability of the negative electrode slurry, so that the lifespan characteristics of the secondary battery are rapidly reduced.

The present composite may have a specific gravity of 1.7 g/cm$^3$ to 2.6 g/cm$^3$, specifically, 2.0 g/cm$^3$ to 2.4 g/cm$^3$.

Specific gravity may refer to particle density, density, or true density. According to an embodiment of the present invention, for the measurement of specific gravity, for example, for the measurement of specific gravity by a dry density meter, Acupick II1340 manufactured by Shimadzu Corporation may be used as a dry density meter. The purge gas to be used may be helium gas, and the measurement may be carried out after 200 times of purge in a sample holder set at a temperature of 23°C.

If the specific gravity of the present composite is 1.7 g/cm$^3$ or more, the dissociation between the negative electrode active material powder due to volume expansion of the negative electrode active material during charging may be prevented, and the cycle deterioration may be suppressed. If the specific gravity is 2.6 g/cm$^3$ or less, the impregnability of an electrolyte is enhanced, which increases the utilization rate of the negative electrode active material, so that the initial charge and discharge capacity can be enhanced.

In contrast, if the specific gravity of the present composite is less than 1.7 g/cm$^3$, the rate characteristics of the secondary battery may be deteriorated. If it exceeds 2.6 g/cm$^3$, the contact area with the electrolyte increases, which may expedite the decomposition reaction of the electrolyte, or a side reaction of the battery may take place.

In addition, the present composite may have a specific surface area of 3 m$^2$/g to 30 m$^2$/g, 3 m$^2$/g to 25 m$^2$/g, or 3 m$^2$/g to 20 m$^2$/g. If the specific surface area of the present composite is less than 3 m$^2$/g, the surface activity is low, and the bonding force of the binder in the preparation of an electrode is weak. As a result, the cycle characteristics may be decreased when charging and discharging are repeated. On the other hand, if the specific surface area of the present composite exceeds 30 m$^2$/g, the amount of a solvent absorbed in the preparation of an electrode is increased, which may require a large amount of a binder in order to maintain binding properties. As a result, there is a concern that the conductivity may be lowered, resulting in deteriorated cycle characteristics. Further, the contact area with the electrolyte increases, which may expedite the decomposition reaction of the electrolyte, or a side reaction of the battery may take place.

The specific surface area can be measured by the BET method by nitrogen adsorption. For example, a specific surface area measuring device (Macsorb HM (model 1210) of MOUNTECH, Belsorp-mini II of Microtrac BEL, or the like) generally used in the art may be used.

The present composite may have an electrical conductivity of 0.5 S/cm to 10 S/cm, specifically, 0.8 S/cm to 8 S/cm, more specifically, 0.8 S/cm to 6 S/cm. The electrical conductivity of a negative electrode active material is an important factor for facilitating electron transfer during an electrochemical reaction. However, when a high-capacity negative electrode active material is prepared using silicon or a silicon oxide compound, it is not easy to achieve an appropriate level of electrical conductivity. Thus, an embodiment of the present invention can provide a negative electrode active material having an electrical conductivity satisfying the above range by preparing the present composite, which has a core-shell structure comprising a shell comprising a carbon layer on the surface of a core comprising silicon, a silicon oxide compound, and magnesium silicate. Further, as the particle size distribution of the present composite is controlled, the thickness expansion of the negative electrode active material can be controlled, so that the lifespan characteristics and capacity of a secondary battery can be further enhanced.

Hereinafter, the constitution of the silicon-silicon complex oxide-carbon composite will be described in detail.

**Core**

The core of the silicon-silicon complex oxide-carbon composite according to an embodiment of the present invention comprises silicon, a silicon oxide compound, and magnesium silicate.

Since silicon, a silicon oxide compound, and magnesium silicate are uniformly dispersed inside the core of the silicon-silicon complex oxide-carbon composite and firmly bonded to form the core, it is possible to minimize the atomization of the core due to a volume change during charging and discharging.

Meanwhile, a thin film (an oxide layer) made of silicon oxide may be formed on the surface of the silicon contained in the present composite. Since the surface of silicon can be easily oxidized, it is necessary to reduce the amount of oxygen in the silicon as much as possible. In addition, if moisture remains in the present composite even in a very small amount, it is not preferable because it causes surface oxidation.

Meanwhile, the oxide layer formed on the surface of the silicon reduces the reactivity between the negative electrode active material and the electrolyte, thereby minimizing the formation of a side reaction product layer that may be formed on the surface of the negative electrode active material.

The content of silicon (Si) in the core may be 30 to 80% by weight, specifically, 40 to 70% by weight, more specifically, 40 to 60% by weight, based on the total weight of the silicon-silicon complex oxide-carbon composite. If the content of silicon is less than 30% by weight, the amount of an active material for occlusion and release of lithium is small, which may reduce the charge and discharge capacity of the lithium secondary battery. If the content of silicon exceeds 80% by weight, the charge and discharge capacity of the lithium secondary battery may be increased, whereas the contraction and expansion of the electrode during charging and discharging may be excessively increased, and the negative electrode active material powder may be further atomized, which may deteriorate the cycle characteristics.

Meanwhile, the content of magnesium (Mg) in the present composite may be 2% by weight to 15% by weight, 2% by weight to 12% by weight, or 4% by weight to 10% by weight, based on the total weight of the silicon-silicon complex oxide-carbon composite.

If the content of magnesium is 2% by weight or more, the initial efficiency of the secondary battery may be enhanced. If the content of magnesium is 15% by weight or less, it is advantageous in terms of the cycle characteristics and handling stability of the secondary battery. In addition, if the content of magnesium satisfies the above range, in particular, the initial efficiency may be greatly increased to 85% or more owing to an increase in the $Mg_2SiO_4$ phase.

However, if the content of magnesium (Mg) in the present composite is less than 2% by weight, there may be a problem in that the cycle characteristics of the secondary battery are reduced. If it exceeds 15% by weight, there may be a problem in that the charge capacity of the secondary battery is reduced.

Meanwhile, according to an embodiment of the present invention, the present composite may comprise a metal other than magnesium. The other metals may be at least one selected from the group consisting of alkali metals, alkaline earth metals, Groups 13 to 16 elements, transition metals, rare earth elements, and combinations thereof. Specific examples thereof may include Li, Ca, Sr, Ba, Y, Ti, Zr, Hf, V, Nb, Cr, Mo, W, Fe, Pb, Ru, Ir, Pd, Pt, Cu, Ag, Au, Zn, Cd, B, Al, Ga, Sn, In, Ge, P, As, Sb, Bi, S, and Se.

According to an embodiment of the present invention, the content of magnesium satisfies the above range based on the total weight of the present composite, the crystallite size of the composite comprising a carbon layer is 2 nm to 12 nm, and it has a structure in which silicon is dispersed in the silicon oxide compound or magnesium silicate.

In the present composite, the core comprises silicon, a silicon oxide compound, and magnesium silicate, and they are dispersed with each other so that the phase interfaces are in a bonded state, that is, each phase is in a bonded state at the atomic level. Thus, the volume change is small when lithium ions are occluded and released, and cracks do not occur in the negative electrode active material even when charging and discharging are repeated. Accordingly, since there is no steep decrease in the capacity with respect to the number of cycles, the cycle characteristics of the secondary battery may be excellent.

In addition, since each phase of the silicon, silicon oxide compound, and magnesium silicate is in a bonded state at the atomic level, the detachment of lithium ions is facilitated during discharging of the secondary battery, which makes a good balance between the charge amount and the discharge amount of lithium ions and increases the charge and discharge efficiency. Here, the charge and discharge efficiency (%) refers to the ratio of the discharge capacity (y) to the charge capacity (x) (y/x × 100), indicating the ratio of lithium ions that can be released during discharging among the lithium ions occluded in the negative electrode active material during charging.

The core of the present composite may have an average particle diameter ($D_{50}$) of 0.5 $\mu$m to 10 $\mu$m, specifically, 1.0 $\mu$m to 10.0 $\mu$m or 2.0 $\mu$m to 9.0 $\mu$m. If the average particle diameter ($D_{50}$) of the core is less than 0.5 $\mu$m, the bulk density is too small, and the charge and discharge capacity per unit volume may be deteriorated. On the other hand, if the average particle diameter ($D_{50}$) exceeds 10 $\mu$m, it is difficult to prepare an electrode layer, so that it may be peeled off from the current collector.

The average particle diameter ($D_{50}$) of the core may be achieved by pulverization of the core particles. In addition, after the pulverization to the average particle diameter ($D_{50}$), classification may be carried out to adjust the particle size distribution, for which dry classification, wet classification, or sieve classification (filtration) may be used. In the dry classification, the steps of dispersion, separation (separation of fine particles and defective particles), collection (separation of solids and gases), and discharge are carried out sequentially or simultaneously using an air stream, in which pretreatment (adjustment of moisture, dispersibility, humidity, and the like) is carried out prior to classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out pulverization and classification at one time.

If core particles having an average particle diameter of 0.5 $\mu$m to 10 $\mu$m are achieved by the pulverization and classification treatment, the initial efficiency or cycle characteristics may be enhanced by about 10% to 20% as compared with before classification. The core particles upon the pulverization and classification may have a Dmax of about 10 $\mu$m or less. In such a case, the specific surface area of the core particles may decrease; as a result, lithium supplemented to the solid electrolyte interface (SEI) layer may decrease.

In addition, according to an embodiment, a core structure may be formed in which closed pores or voids are introduced to the inside of the core, and silicon, a silicon oxide compound, and magnesium silicate are employed simultaneously and uniformly dispersed in an atomic order. In addition, the size of each particle of the silicon, silicon oxide compound, and magnesium silicate in the core may be atomized. If the size of each particle of the silicon, silicon oxide compound, and magnesium silicate is too large, it would be difficult to be present inside the core, and the function as a core cannot be sufficiently performed.

As the present composite comprises the core, it is possible to suppress volume expansion, and it produces the effect of preventing or reducing a side reaction with an electrolyte. As a result, the discharge capacity, lifespan characteristics, and thermal stability of the secondary battery may be enhanced.

Hereinafter, each component contained in the core will be described in detail.

**Silicon**

As the core in the silicon-silicon complex oxide-carbon composite comprises silicon, a high capacity may be achieved when it is applied to a secondary battery.

The silicon may be formed as dispersed in a silicon oxide compound or magnesium silicate.

Since the silicon charges lithium, the capacity of a secondary battery may decrease if silicon is not employed. The silicon may be crystalline or amorphous and specifically may be amorphous or in a similar phase thereto. If the silicon is crystalline, as the size of the crystallites is small, the density of the matrix may be enhanced and the strength may be fortified to prevent cracks. Thus, the initial efficiency or cycle lifespan characteristics of the secondary battery can be further enhanced. In addition, if the silicon is amorphous or in a similar phase thereto, expansion or contraction during charging and discharging of the lithium secondary battery is small, and battery performance such as capacity characteristics can be further enhanced.

Although the silicon has high initial efficiency and battery capacity together, it is accompanied by a very complex crystal change by electrochemically absorbing, storing, and releasing lithium atoms. As the reaction of electrochemically absorbing, storing, and releasing lithium atoms proceeds, the composition and crystal structure of silicon may be changed to Si (crystal structure: Fd3m), LiSi (crystal structure: 141/a), $Li_2Si$ (crystal structure: C2/m), $Li_7Si_2$ (Pbam), $Li_{22}Si_{15}$ (F23), or the like. In addition, the volume of silicon may expand by about 4 times (400%) according to the change in the complex crystal structure. Thus, as the charge and discharge cycle is repeated, silicon is destroyed, and a bond between lithium atoms and silicon is formed. As a result, the insertion site of lithium atoms that silicon had in the beginning is damaged, which significantly reduces the cycle lifespan.

The silicon may be uniformly distributed inside the present composite. In such a case, excellent mechanical properties such as strength may be achieved.

In addition, the present composite may have a structure in which silicon is uniformly dispersed in a silicon oxide compound or magnesium silicate. In addition, as the silicon is dispersed in magnesium silicate to surround it, it is possible to suppress the expansion and contraction of silicon to obtain high performance of the secondary battery.

In the present composite according to an embodiment of the present invention, when the silicon is subjected to an X-ray diffraction (Cu-Kα) analysis using copper as a cathode target and calculated by the Scherrer equation based on a full width at half maximum (FWHM) of the diffraction peak of Si (220) around 2θ = 47.5°, it may have a crystallite size of 2 nm to 20 nm, 2 nm to 12 nm, or 2 nm to 10 nm.

In addition, the silicon contained in the present composite may be in an amorphous form, a crystalline form having a crystallite size of 2 nm to 20 nm, or a mixture thereof. Although it is preferable that silicon is close to 100% amorphous, it is difficult to obtain completely amorphous silicon in the process; thus, the silicon may be a mixture of amorphous and crystalline forms. Even in such a case, the ratio of the amorphous form of silicon is preferably 50 % or more. If the silicon is amorphous, crystalline having a crystallite size in the above range, or a mixture thereof, cracking may be suppressed during the first charge and discharge of the secondary battery. If some cracks are generated during the first charge and discharge, these cracks become a starting point and expand to lead to large cracks during repeated charging and discharging. Thus, if the silicon is outside the above range, a problem may arise in the performance of the secondary battery. In addition, if the silicon is amorphous or crystalline having a crystallite size in the above range, damage due to volume expansion by repeated charging and discharging can be mitigated.

If the crystallite size of the silicon is less than 2 nm, the charge and discharge capacity of the secondary battery may be reduced, and the properties of the material may change during storage due to increased reactivity, which may cause problems in the process.

In addition, if the crystallite size of the silicon is 2 nm or more, there is little concern that the charge and discharge capacity will be reduced. If the crystallite size of the silicon is 20 nm or less, there is a low possibility that a region that does not contribute to discharging is generated; thus, it is possible to suppress a reduction in the Coulombic efficiency representing the ratio of charge capacity to discharge capacity.

In addition, when the silicon is fine particles, it preferably forms a lithium alloy having a large specific surface area to thereby suppress the destruction of the bulk. The silicon fine particles react with lithium during charging to form $Li_{4.2}Si$ and return to silicon during discharging. In such an event, when X-ray diffraction is frequently performed on the silicon fine particles, the silicon shows a broad pattern, and its structure may be changed to amorphous silicon.

If the silicon fine particles are further atomized to an amorphous or a finer crystallite size, the density of the present composite increases, whereby it may approach a theoretical density, and pores may be remarkably reduced. As a result, the density of the matrix is enhanced and the strength is fortified to prevent cracking; thus, the initial efficiency or cycle lifespan characteristics of the secondary battery may be further enhanced.

**Silicon oxide compound**

As the silicon-silicon complex oxide-carbon composite comprises a silicon oxide compound, it is possible to enhance the capacity and to reduce the volume expansion when applied to a secondary battery.

The silicon oxide compound may be a silicon-based oxide represented by the formula $SiO_x$ ($0.5 \leq x \leq 1.5$). The silicon oxide compound may be specifically $SiO_x$ ($0.8 < x \leq 1.2$), more specifically $SiO_x$ ($0.9 < x \leq 1.1$). In the formula $SiO_x$, when x is less than 0.5, it may be difficult to prepare $SiO_x$. If x exceeds 1.5, the ratio of inert silicon dioxide formed during thermal treatment is large, and there is a concern that the charge and discharge capacity may be deteriorated when it is employed in a lithium secondary battery.

The silicon oxide compound may be amorphous or may have a structure in which silicon is distributed in the amorphous silicon oxide compound when observed by a transmission electron microscope.

The silicon oxide compound can be obtained by a method comprising cooling and precipitating a silicon oxide gas produced by heating a mixture of a silicon powder and a silicon oxide powder (or silicon dioxide powder).

The silicon oxide compound may be employed in an amount of 5% by mole to 45% by mole based on the total silicon-silicon complex oxide-carbon composite.

If the content of the silicon oxide compound is less than 5% by mole, the volume expansion and lifespan characteristics of the secondary battery may be deteriorated. If it exceeds 45% by mole, the initial irreversible reaction of the secondary battery may increase.

Meanwhile, in the case of a negative electrode active material comprising silicon and a silicon oxide compound, a non-conductive side reaction product (SEI) layer may be thickly formed on the surface of the negative electrode active material due to a continuous reaction with the electrolyte during charging and discharging of a secondary battery. As a result, there may be a problem in that the negative electrode active material is electrically short-circuited within the electrode, resulting in a deterioration of lifespan characteristics, and volume expansion of the electrode is further increased due to the side reaction product layer.

Thus, it is necessary to reduce the reactivity between the negative electrode active material and the electrolyte and to minimize the formation of a side reaction product layer that may be formed on the surface of the negative electrode active material. For this purpose, it is necessary to control the content of oxygen on the surface of the silicon or silicon oxide compound particles as little as possible.

To this end, in the present composite comprising silicon, a silicon oxide compound, and magnesium silicate, the ratio of the number of oxygen atoms to the number of silicon atoms (O/Si) may be 0.45 to 1.2. Specifically, the ratio of the number of oxygen atoms to the number of silicon atoms (O/Si) may be 0.45 to 1.0 or 0.45 to 0.80. It is preferable that the O/Si is lower. In such a case, since the active phase attributable to silicon increases, the initial charge and discharge capacity may be enhanced.

Meanwhile, if the content of silicon increases, the ratio of volume expansion (expansion rate) by silicon increases, which undesirably increases the formation of cracks. In order to mitigate the formation of cracks, it is necessary to form pores in the composite or to increase the strength of the matrix by using a strong binder. In order to lower the O/Si ratio, it is preferable to reduce the ratio of silicon oxide or silicon dioxide as much as possible to enhance the charge and discharge capacity or cycle characteristics.

If the O/Si ratio is less than 0.45, there may be difficulties in the process, silicon clusters are formed to easily expand during charging, and the cycle characteristics of the secondary battery may be deteriorated. On the other hand, if the O/Si ratio exceeds 1.2, there is a concern that the specific gravity of inactive silicon dioxide, silicon oxide, or magnesium silicate becomes large, and the charge and discharge capacity may be deteriorated. In addition, the $SiO_2$ layer formed on the surface of silicon oxide becomes thick, and the conductivity of the silicon oxide may decrease. As a result, when used as a negative electrode active material of a lithium secondary battery, sufficient current cannot flow, resulting in an increase in the internal resistance of the battery due to the resistance of the negative electrode, and the performance of the lithium secondary battery thus fabricated may be significantly reduced.

**Magnesium silicate**

As the core of the present composite comprises magnesium silicate, charge and discharge capacity characteristics and cycle characteristics may be enhanced when it is applied to a secondary battery.

Since magnesium silicate hardly reacts with lithium ions during charging and discharging of a secondary battery, it is possible to reduce the expansion and contraction of the electrode when lithium ions are occluded in the electrode, thereby enhancing the cycle characteristics of the secondary battery. In addition, the strength of the matrix, which is a continuous phase surrounding the silicon, can be fortified by the magnesium silicate.

The magnesium silicate may be represented by the following Formula 1:

[Formula 1]    MgxSiOy

In Formula 1, $0.5 \leq x \leq 2$, and $2.5 \leq y \leq 4$.

The magnesium silicate may comprise at least one selected from $MgSiO_3$ crystals (enstatite) and $Mg_2SiO_4$ crystals (forsterite).

In addition, according to an embodiment, the magnesium silicate may comprise $MgSiO_3$ crystals and may further comprise $Mg_2SiO_4$ crystals.

In addition, according to an embodiment, the magnesium silicate comprises $MgSiO_3$ crystals and further comprises $Mg_2SiO_4$ crystals. In such an event, in an X-ray diffraction analysis, the ratio IF/IE of an intensity (IF) of the X-ray diffraction peak corresponding to $Mg_2SiO_4$ crystals appearing in the range of $2\theta = 22.3°$ to $23.3°$ to an intensity (IE) of the X-ray diffraction peak corresponding to $MgSiO_3$ crystals appearing in the range of $2\theta = 30.5°$ to $31.5°$ may be greater than 0 to 1.

In addition, the magnesium silicate may comprise substantially a large amount of $MgSiO_3$ crystals in order to enhance the charge and discharge capacity and initial efficiency.

In the present specification, the phrase "comprising substantially a large amount of" a component may mean to comprise the component as a main component or mainly comprise the component.

In the magnesium silicate, the content of magnesium relative to $SiO_x$ may have an impact on the initial discharge characteristics or cycle characteristics during charging and discharging. Silicon in the $SiO_x$ may be alloyed with lithium atoms to enhance the initial discharge characteristics. Specifically, if $Mg_2SiO_3$ crystals are employed in the magnesium silicate in a substantially large amount, the improvement effect of the cycle during charging and discharging may be increased.

If the magnesium silicate comprises both $Mg_2SiO_3$ crystals and $Mg_2SiO_4$ crystals, the initial efficiency may be enhanced. If $Mg_2SiO_4$ crystals are employed more than $Mg_2SiO_3$ crystals, the degree of alloying of silicon with lithium atoms is lowered, whereby the initial discharge characteristics may be deteriorated.

When the magnesium silicate comprises both $MgSiO_3$ crystals and $Mg_2SiO_4$ crystals together, it is preferable that the $MgSiO_3$ crystals and $Mg_2SiO_4$ crystals are uniformly dispersed in the core. Their crystallite size may be 30 nm or less, specifically, 20 nm or less.

Silicon in the magnesium silicate reacts with lithium during charging to form $Li_{4.2}Si$ and returns to silicon during discharging. The capacity of the secondary battery may decrease due to a volume change during repeated charging and discharging thereof. However, in particular, the rate of volume change of $MgSiO_3$ crystals is smaller than that of $Mg_2SiO_4$ crystals, so that the cycle characteristics of the secondary battery may be further enhanced. In addition, the $MgSiO_3$ crystals and $Mg_2SiO_4$ crystals may act as a diluent or inert material in a negative electrode active material.

According to an embodiment, when magnesium is doped to $SiO_x$, for example, when SiO and magnesium are reacted, as the doping amount of magnesium increases, it may proceed in the order of the following Reaction Schemes 1 to 3:

[Reaction scheme 1]    $3Si(s) + 3SiO_2(s) + 2Mg(s) \rightarrow 6SiO(g) + 2Mg(g)$

[Reaction scheme 2]    $3SiO(g) + Mg(g) \rightarrow 2Si(s) + MgSiO_3(s)$

[Reaction scheme 3]    $4SiO(g) + 2Mg(g) \rightarrow 3Si(s) + Mg_2SiO_4(s)$

In the above reactions, the production mechanism of $MgSiO_3(s)$ and $Mg_2SiO_4(s)$ may be represented as in the following Reaction Schemes 4 to 6:

[Reaction scheme 4]    $SiO + 1/3Mg \rightarrow 2/3Si + 1/3MgSiO_3$

[Reaction scheme 5]    $SiO + 1/2Mg \rightarrow 3/4Si + 1/4Mg_2SiO_4$

[Reaction scheme 6]    $SiO + Mg \rightarrow Si + MgO$

Specifically, when the content of Mg relative to SiO is 1/3% by mole, the reaction takes place as shown in Reaction Scheme 4, and an Si phase, $MgSiO_3$, and unreacted SiO are formed until it reaches 1/3% by mole. When it is 1/3% by mole, Si and $MgSiO_3$ may be formed.

As described above, as the doping amount of magnesium increases, a large amount of $Mg_2SiO_4$ may be formed, whereas the crystallite size of silicon may be also increased. It is understood that since the molar ratio of magnesium to silicon is large, the amount of evaporation of magnesium increases and the reaction temperature rises accordingly, thereby increasing the crystallite size of silicon. As the crystallite size is increased, the amount of silicon supposed to be alloyed with lithium atoms is small, so that the initial efficiency of the secondary battery may be deteriorated. Thus, it may be undesirable that $Mg_2SiO_4$ is formed in excess. At the same time, since the silicon atoms and the magnesium atoms added react to form $Mg_2SiO_4$, which hardly reacts with the lithium atoms, the initial efficiency of the secondary battery may be deteriorated.

Meanwhile, if $MgSiO_3$ is formed more than $Mg_2SiO_4$ in the magnesium silicate, the ratio of magnesium to silicon is small, so that the elevation of temperature due to the evaporation of Mg may be reduced. As a result, the growth of silicon may be suppressed, so that the crystallite size may be 20 nm or less, which may enhance the cycle characteristics and initial efficiency of the secondary battery.

Meanwhile, since SiO is a mixture of Si and $SiO_2$ ($1/2Si + 1/2SiO_2$) as shown in the following Reaction Scheme 7, $SiO_2$ may be produced by a disproportionation reaction in an actual reaction:

[Reaction scheme 7]     $Si(s) + SiO_2(s) \rightarrow 2SiO(g)$ $2SiO(g) \rightarrow 2SiO(s) \rightarrow Si(s) + SiO_2(s)$ (disproportionation reaction)

In Reaction Scheme 7, $SiO_2$ produced by the disproportionation reaction may react with Li to cause an irreversible reaction to form lithium silicate, thereby deteriorating the initial efficiency.

For example, if 0.4 mole of Mg is added relative to 1 mole of SiO, the content of Mg is 18% by weight. Since the element concentration distribution is uniform, the reaction in accordance with the content of Mg may take place. As described above, $MgSiO_3$ and $Mg_2SiO_4$ may be formed as Mg-containing compounds simultaneously with the formation of Si.

As described above, although the doping amount of magnesium is important for the formation of $MgSiO_3$ crystals (s) and $Mg_2SiO_4$ crystals (s), the degree of uniformity of the element concentration distribution of magnesium may also be important. If the element concentration distribution of magnesium is not uniform, silicon dioxide ($SiO_2$) may be formed, which is not preferable. In addition, if silicon dioxide, metallic magnesium, or an MgSi alloy is formed in the core of the present composite, the initial efficiency or capacity retention rate of the secondary battery may be deteriorated. Thus, the performance of the secondary battery may be enhanced by making the element concentration distribution of magnesium uniform.

Specifically, in the present composite, the ratio of Mg atoms to Si atoms in the silicon-silicon composite oxide, i.e., Mg atoms:Si atoms, may be an atomic ratio of 1:1 to 1:100. Specifically, the Mg atom:Si atom may have an atomic ratio of 1:1 to 1:50, 1:2 to 1:50, or 1:2 to 1:20. If the atomic ratio of Mg to Si is less than the above range (if the amount of Mg added is excessively large), an excessive amount of $Mg_2SiO_4$ may be formed, so that the initial charge and discharge efficiency may be enhanced, whereas the charge and discharge cycle characteristics may be deteriorated. In addition, if the atomic ratio of Mg atoms to Si atoms exceeds the above range (if the amount of Si added is excessively large), the improvement effect of initial efficiency may be small.

The present composite according to an embodiment may have a peak for $MgSiO_3$ crystals appearing in the range of a diffraction angle of $30.5° \leq 2\theta \leq 31.5°$ in an X-ray diffraction analysis. In addition, the present composite may have a peak for $Mg_2SiO_4$ crystals appearing in the range of a diffraction angle of $22.3° \leq 2\theta \leq 23.3°$ in an X-ray diffraction analysis.

For $MgSiO_3$ crystal, for example, when a line is drawn between the diffraction intensity at $2\theta = 31.8°$ and the diffraction intensity at $2\theta = 33.8°$, and the straight line is a base intensity, if the ratio of the maximum intensity P1 at $2\theta = 32.8 \pm 0.2°$ to the base intensity B1 at the maximum intensity angle, P1/B1 > 1.1, it may be determined that $MgSiO_3$ crystals are present.

For $Mg_2SiO_4$, for example, when a line is drawn between the diffraction intensity at $2\theta = 31.3°$ and the diffraction intensity at $2\theta = 33.3°$, and the straight line is a base intensity, if the ratio of the maximum intensity P2 at $2\theta = 32.3 \pm 0.3°$ to the base intensity B2 at the maximum intensity angle, P2/B2 > 1.1, it may be determined that $Mg_2SiO_4$ crystals are present.

As the core of the present composite according to an embodiment comprises magnesium silicate, even when lithium ions rapidly increase during charging and discharging, it hardly reacts with lithium ions, so that it produces the effect of reducing the degree of expansion and contraction of the electrode. As a result, the cycle characteristics of the secondary battery may be enhanced. In addition, as the core of the present composite comprises magnesium silicate, the irreversible capacity is small, so that the charge and discharge efficiency may be enhanced.

**Shell**

As the shell of the silicon-silicon complex oxide-carbon composite according to an embodiment of the present invention comprises a carbon layer (carbon film), a secondary battery having a high capacity can be achieved. In particular, it is possible to solve the problems of volume expansion and stability degradation that may occur as silicon is employed and to enhance the electrical conductivity.

In the present composite, it is preferable that a carbon layer is uniformly formed over the entire surface of the core in order to further enhance the electrical conductivity. If a uniform carbon coating is formed, it is possible to suppress the occurrence of cracks caused by the stress generation due to the steep volume expansion of silicon. Since cracks occur irregularly, there may be a region that is electrically short-circuited, which may result in a defective battery. Thus, if a carbon layer is uniformly formed, it is possible to improve the initial efficiency and lifespan characteristics of the negative electrode active material.

Specifically, as a shell is employed in which a conductive carbon layer is formed on the surface in part or in its entirety, specifically, the entire surface of each of the silicon, silicon oxide compound, and magnesium silicate contained in the core of the present composite, it is possible to enhance the electrical conductivity.

For example, the core may have a structure in which amorphous silicon having a size of several nanometers to several tens of nanometers is finely dispersed in a silicon oxide compound or magnesium silicate. In general, a silicon oxide compound has advantages in that it has a battery capacity 5 to 6 times larger than silicon or carbon and small volume expansion, whereas it has problems in that it has a large irreversible capacity due to an irreversible reaction, a short lifespan, and a very low initial efficiency of 70% or less. Here, the irreversible reaction refers to that Li-Si-O or Si + $Li_2O$ is formed by a reaction with lithium ions during discharging. The problem of short lifespan and low initial efficiency may be attributable to a decrease in the diffusion rate of lithium atoms, that is, a decrease in electrical conductivity, since the structural stability is low during charging and discharging.

Thus, the present composite according to an embodiment of the present invention has a core-shell structure comprising a shell formed of a carbon layer by coating the surface of the core of the composite with carbon in order to solve the problem of reduced conductivity.

In addition, as a shell is formed on the surface of the core, a side reaction with silicon contained in the core and that with the electrolyte can be prevented. In addition, it is possible to prevent or mitigate contamination of the silicon, silicon oxide compound, and magnesium silicate.

In addition, in order to further enhance the conductivity, the carbon layer may be formed uniformly and thinly. In such an event, the initial efficiency and lifespan characteristics of the secondary battery may be further enhanced.

According to an embodiment of the present invention, once a core has been prepared in which a uniform carbon layer is formed on each surface of silicon, silicon oxide compound, and magnesium silicate, a so-called double-structured carbon layer may be formed in which a thin and uniform carbon layer is formed as a shell on the surface of the core. If the carbon layer in a double structure is formed, there is an effect of preventing each of the silicon, silicon oxide compound, or magnesium silicate from being exposed to the outside. The so-called double-structured carbon layer may be formed by, for example, repeatedly carrying out carbon deposition several times. Thereafter, a double carbon layer having a shell function is formed on the surface of the core on which a carbon layer has been formed; thus, it is possible to prevent each particle from being exposed to the outside. In such a case, it is possible to maintain an electrical connection despite a volume change of the silicon, silicon oxide compound, or magnesium silicate during charging and discharging. In addition, even if cracks occur on the surface of the carbon layer, it is possible to maintain an electrical connection to the carbon layer unless the carbon layer is completely separated.

The method for coating the core surface with carbon may be a method of chemical vapor depositing (CVD) the core of a silicon-silicon composite oxide composite in an organic gas and/or vapor, or a method of introducing an organic gas and/or vapor into the reactor during thermal treatment.

In addition, not only does the thickness of the carbon layer or the amount of carbon have an impact on the conductivity, but also the uniformity of the layer may be important. For example, even if a sufficient amount of carbon is obtained, if the film is not uniform, whereby the surface of the silicon oxide is partially exposed, or a part thereof is insulating, the charge and discharge capacity or cycle characteristics of the secondary battery may be adversely affected.

The electrical conductivity of carbon can be adjusted by selecting the type of carbon source material, the type and content of mixed gas, and the reaction time and reaction temperature, respectively.

According to an embodiment, the content of carbon (C) may be 2% by weight to 30% by weight, 2% by weight to 15% by weight, or 4% by weight to 10% by weight, based on the total weight of the silicon-silicon complex oxide-carbon composite.

If the content of carbon (C) is less than 2% by weight, a sufficient effect of enhancing conductivity cannot be expected, and there is a concern that the electrode lifespan of the lithium secondary battery may be deteriorated. In addition, if it exceeds 30% by weight, the discharge capacity of the secondary battery may be decreased and the bulk density may be decreased, so that the charge and discharge capacity per unit volume may be deteriorated.

The carbon layer may have an average thickness of 1 nm to 300 nm, specifically, 5 nm to 200 nm or 10 nm to 150 nm, more specifically, 10 nm to 100 nm. If the thickness of the carbon layer is 1 nm or more, an enhancement in conductivity may be achieved. If it is 300 nm or less, a decrease in the capacity of the secondary battery may be suppressed.

The average thickness of the carbon layer may be measured, for example, by the following procedure.

First, the negative electrode active material is observed at an arbitrary magnification by a transmission electron microscope (TEM). The magnification is preferably, for example, a degree that can be confirmed with the naked eyes. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

The carbon layer may comprise at least one selected from graphene, reduced graphene oxide, a carbon nanotube, and a carbon nanofiber. Specifically, it may comprise graphene. In addition, the carbon layer may further comprise graphite.

The carbon layer may enhance the electrical contact between the particles while maintaining the outer appearance of the shell. In addition, excellent electrical conductivity may be secured even after the electrode is expanded during charging and discharging, so that the performance of the secondary battery can be further enhanced.

**[Method for preparing a silicon-silicon complex oxide-carbon composite]**

According to an embodiment of the present invention, there is provided a method for preparing the silicon-silicon complex oxide-carbon composite.

The method for preparing a silicon-silicon complex oxide-carbon composite comprises a first step of preparing a raw material obtained by using a silicon powder and a silicon oxide ($SiO_x$ ($0.5 \leq x \leq 2$) powder; a second step of heating and evaporating the raw material and metallic magnesium at different temperatures, followed by deposition and cooling thereof to obtain a silicon-silicon composite oxide composite as a core; a third step of pulverizing and classifying the silicon-silicon composite oxide composite to an average particle diameter of 0.5 $\mu$m to 10 $\mu$m to obtain a silicon-silicon composite oxide composite powder; a fourth step of forming a carbon layer on the surface of the silicon-silicon composite oxide composite powder by using a chemical thermal decomposition deposition method to obtain a composite having a core-shell structure; and a fifth step of subjecting the composite having a core-shell structure to at least one step of pulverization and classification to obtain a silicon-silicon complex oxide-carbon composite.

Specifically, in the method for preparing the present composite, the first step may comprise preparing a raw material obtained by using a silicon powder and a silicon oxide powder.

The raw material may be a mixture obtained by mixing a silicon powder and a silicon oxide powder, or a compound obtained by heating the mixture and cooling and precipitating the gas produced thereby. In addition, the mixture and the compound may be used as a blend.

Specifically, according to an embodiment of the present invention, a mixture obtained by mixing a silicon powder and a silicon oxide powder may be used as the raw material.

The silicon oxide powder may be represented as $SiO_x$, where x may be 0.5 to 2. In addition, the mixing may be carried out by mixing a silicon powder and a silicon oxide powder such that the molar ratio of the oxygen element per mole of the silicon element in the mixture is 0.8 to 1.2. Specifically, a silicon powder and a silicon oxide powder may be mixed at a molar ratio of the oxygen element per mole of the silicon element being 0.9 to 1.1.

For example, the mixing may be carried out by mixing at a molar ratio of the silicon oxide powder per mole of the silicon powder being 0.8 to 1.2.

In addition, in light of the presence of surface oxygen of the silicon powder and trace oxygen in the reaction furnace when the silicon powder and the silicon dioxide powder are mixed, it may be 0.9 to 1.1 moles or 0.95 to 1.05 moles of a silicon dioxide powder per mole of a silicon powder. In addition, a mixed granular raw material obtained by compounding, mixing, granulating, and drying a silicon powder and a silicon dioxide powder may be used.

According to another embodiment of the present invention, a compound obtained by a method comprising mixing and heating the silicon powder and the silicon oxide powder, and cooling and precipitating the silicon oxide gas produced thereby may be used as the raw material, wherein the compound is $SiO_x$ ($0.9 \leq x \leq 1.1$).

The reaction for generating the silicon oxide gas may be carried out by heating the raw material for precipitation under a reduced pressure. The reaction temperature in such an event may be 1,000°C or higher, for example, 1,200°C to 1,500°C.

Meanwhile, the deposition unit for cooling and recovering the silicon oxide gas may be maintained at a low temperature of 25°C to 80°C. The silicon oxide gas is cooled and maintained at a low temperature after cooling, and a homogenized amorphous silicon oxide compound may be precipitated and produced. As a result, a silicon oxide compound can be preferably obtained by recovering and pulverizing the precipitate.

In addition, if x is less than 0.5 in the silicon oxide $SiO_x$ when a mixture of the silicon powder and the silicon oxide powder is used as a raw material powder, an appropriate amount of the silicon dioxide powder may be further added to adjust the value of x to the range of 0.5 to 2.

In addition, when the mixture and the compound may be used as a blend, the mixing may be carried out by mixing the mixture and the compound such that the molar ratio of the oxygen element per mole of the silicon element in the blend is 0.8 to 1.2. Specifically, the mixture and the compound may be mixed at a molar ratio of the oxygen element per mole of the silicon element being 0.9 to 1.1.

In addition, the raw material may have a molar ratio of the oxygen element per mole of the silicon element being 0.8 to 1.2.

If the molar ratio of the oxygen element per mole of the silicon element in the raw material of the first step is less than 0.8 or greater than 1.2, a large amount of reaction residues may remain after the second step reaction is carried out, which lowers the production yield.

In addition, when a blend of the mixture and the compound is used, the compound may be further added in an amount of 20% by weight to less than 100% by weight based on the total weight of the blend.

Meanwhile, the average particle diameter of the silicon powder and the silicon oxide powder used as the raw material is not limited, respectively. For example, the average particle diameter of the silicon powder may be 5 $\mu$m to 50 $\mu$m, 10 $\mu$m to 40 $\mu$m, or 15 $\mu$m to 30 $\mu$m, and the average particle diameter of the silicon oxide powder may be 5 nm to 50 nm, 10 nm to 40 nm, or 15 nm to 30 nm.

If a powder having an average particle diameter within the above range is used, the deposition and evaporation of silicon oxide become uniform, and fine silicon can be obtained.

In the method for preparing the present composite, the second step may comprise heating and evaporating the raw material and metallic magnesium at different temperatures, followed by deposition and cooling thereof to obtain a silicon-silicon composite oxide composite (composite A).

The raw material and metallic magnesium may be put into a crucible in a vacuum reactor and heated and evaporated at different temperatures, respectively.

The heating and evaporation of the raw material in the second step may be carried out at 900°C to 1,800°C, 1,000°C to 1,600°C, or 1,200°C to 1,600°C under a pressure of 0.0001 Torr to 2 Torr. If the temperature is lower than 900°C, it may be difficult for the reaction to be carried out, thereby lowering the productivity. If it exceeds 1,800°C, the reactivity may be reduced.

In addition, the heating and evaporation of metallic magnesium in the second step may be carried out at 500°C to 1,100°C, 600°C to 1,000°C, or 650°C to 900°C under a pressure of 0.0001 Torr to 2 Torr.

If the heating and evaporation of the raw material and the metallic magnesium satisfy the above ranges, fine silicon and fine magnesium silicate may be produced, whereby a silicon oxide compound having a desired $SiO_x$ ($0.5 \leq x \leq 1.5$) composition may be obtained.

Meanwhile, the deposition in the second step may be carried out at 300°C to 800°C, specifically, 400°C to 700°C.

The cooling may be carried out by rapidly cooling to room temperature by water cooling. In addition, it may be carried out at room temperature while an inert gas is injected. The inert gas may be at least one selected from carbon dioxide gas, argon (Ar), helium (He), nitrogen ($N_2$), and hydrogen ($H_2$).

In the present invention, the raw material and the metallic magnesium are heated and evaporated, which are then deposited on a substrate inside a reactor, so that a silicon-silicon composite oxide complex can be synthesized through a uniform vapor-phase reaction of particles. Thus, it is possible to prevent the rapid growth of silicon due to an exothermic reaction as magnesium is excessively mixed locally as in a solid-state reaction.

In the method for preparing the present composite, the third step may comprise pulverizing and classifying the silicon-silicon composite oxide composite to an average particle diameter of 0.5 $\mu$m to 10 $\mu$m to obtain a silicon-silicon composite oxide composite powder (composite B).

More specifically, the pulverization may be carried out such that the average particle diameter ($D_{50}$) is 2 $\mu$m to 10 $\mu$m, specifically, 3 $\mu$m to 8 $\mu$m.

For the pulverization, a pulverizing apparatus well known in the art may be used. For example, the pulverization may be carried out using at least one selected from the group consisting of a jet mill, a ball mill, a stirred media mill, a roll mill, a hammer mill, a pin mill, a disk mill, a colloid mill, and an atomizer mill.

Specifically, the pulverization may be carried out using a ball mill or a stirred media mill that moves a pulverizing medium, such as balls and beads, to pulverize the object to be pulverized by using an impact, friction, or compressive force supplied by the kinetic energy, or a roll mill that performs pulverization using a compressive force by a roller. In addition, a jet mill may be used, which causes the object to be pulverized to collide with the interior material or to collide with each other at high speed, to perform pulverization by an impact force supplied by the collision. In addition, a hammer mill, a pin mill, or a disk mill may be used to pulverize the object to be pulverized using an impact force supplied by the rotation of a rotor provided with hammers, blades, or pins. In addition, a colloid mill using a shear force or an atomizer mill as a high-pressure wet opposing impact type disperser may be used.

In addition, the classification may be carried out using at least one selected from dry classification, wet classification, and sieve classification.

According to an embodiment of the present invention, a dry classification equipped with a cyclone together with a jet mill may be used.

In the jet mill, the processes of dispersion, separation (separation of fine particles and coarse particles), collection (separation of solids and gases), and discharge may be sequentially carried out using an air stream. In such a case, the classification efficiency should not be impaired by the impact of interference between particles, particle shape, disturbance of air stream, velocity distribution, and static electricity.

That is, the air stream to be used is pretreated (for adjustment of water, dispersibility, humidity, and the like) before classification to adjust the concentration of moisture and oxygen. In addition, in a dry type, such as a cyclone, in which a classifier is integrated, pulverization and classification are carried out at a time, making it possible to achieve a desired particle size distribution.

In the method for preparing the present composite, the fourth step may comprise forming a carbon layer on the surface of the silicon-silicon composite oxide composite powder by using a chemical thermal decomposition deposition method to obtain a composite having a core-shell structure.

In this step, a carbon layer is formed on the surface of the silicon-silicon composite oxide composite, and the carbon layer may enhance the electrical contact between particles. In addition, since excellent electrical conductivity may be imparted even after the electrode is expanded by charging and discharging, the performance of the secondary battery can be further enhanced.

The carbon layer may increase the conductivity of the negative electrode active material to enhance the output characteristics and cycle characteristics of the secondary battery and may increase the stress relaxation effect when the volume of the negative electrode active material is changed.

When a carbon layer is formed on the surface of the silicon-silicon composite oxide composite powder by a chemical thermal decomposition deposition method, the type of the carbon source material, and the type content, reaction time, and reaction temperature of the mixed gas may each be selected and adjusted.

The carbon layer may comprise at least one selected from the group consisting of graphene, reduced graphene oxide, a carbon nanotube, and a carbon nanofiber.

The step of forming a carbon layer may be carried out by injecting at least one carbon source gas selected from a compound represented by the following Formulae 2 to 4 and carrying out a reaction of the silicon-silicon composite oxide composite obtained in the third step in a gaseous state at 600°C to 1,200°C.

[Formula 2] $\quad C_N H_{(2N + 2-A)}[OH]_A$

in Formula 2, N is an integer of 1 to 20, and A is 0 or 1,

[Formula 3] $\quad C_N H_{(2N-B)}$

in Formula 3, N is an integer of 2 to 6, and B is 0 to 2,

[Formula 4] $\quad C_x H_y O_z$

in Formula 4, x is an integer of 1 to 20, y is an integer of 0 to 25, and z is an integer of 0 to 5.

In addition, in Formula 4, x may be the same as, or smaller than, y.

The compound represented by Formula 2 may be at least one selected from the group consisting of methane, ethane, propane, butane, methanol, ethanol, propanol, propanediol, and butanediol. The compound represented by Formula 3 may be at least one selected from the group consisting of ethylene, propylene, butylene, butadiene, and cyclopentene. The compound represented by Formula 4 may be at least one selected from the group consisting of acetylene, benzene, toluene, xylene, ethylbenzene, naphthalene, anthracene, and dibutyl hydroxy toluene (BHT).

The carbon source gas may further comprise at least one inert gas selected from hydrogen, nitrogen, helium, and argon. In addition, at least one gas selected from water vapor, carbon monoxide, and carbon dioxide may be further added together with the carbon source gas.

When water vapor is added in the reaction, the silicon-silicon complex oxide-carbon composite may have a higher conductivity.

According to an embodiment of the present invention, since a carbon layer with high crystallinity is formed on the surface of the present composite when water vapor is added in the reaction, high conductivity can be achieved even when a smaller amount of carbon is coated. The content of water vapor is not particularly limited. For example, it may be 0.01 to 10% by volume based on 100% by volume of the total carbon source gas.

The carbon source gas may be, for example, methane, a mixed gas containing methane and an inert gas, an oxygen-containing gas, or a mixed gas containing methane and an oxygen-containing gas.

According to an embodiment, the carbon source gas may be a mixed gas of $CH_4$ and $CO_2$ or a mixed gas of $CH_4$, $CO_2$, and $H_2O$.

The mixed gas of $CH_4$ and $CO_2$ may be provided at a molar ratio of about 1:0.20 to 0.50. Specifically, the mixed gas of $CH_4$ and $CO_2$ may have a molar ratio of 1:0.25 to 0.45. More specifically, it may have a molar ratio of about 1:0.30 to 0.40.

In addition, a mixed gas of $CH_4$, $CO_2$, and $H_2O$ may have a molar ratio of about 1:0.20 to 0.50:0.01 to 1.45, specifically, 1:0.25 to 0.45:0.10 to 1.35, in particular, about 1:0.30 to 0.40:0.50 to 1.0.

According to another embodiment, the carbon source gas may be a mixed gas of $CH_4$ and $N_2$.

The mixed gas of $CH_4$ and $N_2$ may have a molar ratio of about 1:0.20 to 0.50, specifically, about 1:0.25 to 0.45, more specifically, 1:0.30 to 0.40.

In addition, according to an embodiment, the carbon source gas may not comprise an inert gas such as nitrogen.

The reaction may be carried out at 600°C to 1,200°C, specifically, 700°C to 1,100°C, more specifically, 700°C to 1,000°C.

The pressure during the thermal treatment may be selected in consideration of the thermal treatment temperature, the composition of the gas mixture, the amount of carbon coating, and the like. The pressure during the thermal treatment may be controlled by adjusting the amount of the gas mixture introduced and the amount of the gas mixture discharged. For example, the pressure during the thermal treatment may be 0.1 atm or more, for example, 0.5 atm or more, 1 atm or more, 2 atm or more, 3 atm or more, or 5 atm or more, but it is not limited thereto.

The reaction time (or thermal treatment time) may be appropriately adjusted depending on the thermal treatment temperature, the pressure during the thermal treatment, the composition of the gas mixture, and the desired amount of carbon coating. For example, the reaction time may be 10 minutes to 100 hours, specifically, 30 minutes to 90 hours, more specifically, 50 minutes to 40 hours, but it is not limited thereto. Without being bound by a particular theory, as the reaction time is longer, the thickness of the carbon layer formed increases, which may enhance the electrical properties of the composite.

In the method for preparing a silicon-silicon complex oxide-carbon composite according to an embodiment of the present invention, it is possible to form a thin and uniform carbon layer comprising at least one selected from graphene, reduced graphene oxide, a carbon nanotube, and a carbon nanofiber as a main component on the surface of the silicon-silicon composite oxide composite even at a relatively low temperature through a gas-phase reaction of the carbon source gas. In addition, the detachment reaction in the carbon layer thus formed does not substantially take place.

According to the preparation method of the present invention, a raw material obtained by using a silicon powder and a silicon oxide powder is reacted with metallic magnesium to obtain a silicon-silicon composite oxide composite (core) comprising silicon, a silicon oxide compound, and magnesium silicate, and a carbon layer is formed on the surface of the silicon-silicon composite oxide composite to obtain a composite having a core-shell structure. In addition, the carbon layer does not substantially comprise magnesium or an oxide component thereof.

In addition, since a carbon layer is uniformly formed over the entire surface of the silicon-silicon composite oxide composite through the gas-phase reaction, a carbon film (carbon layer) having high crystallinity can be formed. Thus, when the present composite is used as a negative electrode active material, the electrical conductivity of the negative electrode active material can be enhanced without changing the structure.

The specific surface area of the present composite may decrease according to the amount of carbon coating.

The structure of the graphene-containing material may be a layer, a nanosheet type, or a structure in which several flakes are mixed.

If a carbon layer comprising a graphene-containing material is uniformly formed over the entire surface of the silicon-silicon complex oxide-carbon composite, it is possible to suppress the volume expansion as a graphene-containing material that has enhanced conductivity and is flexible for volume expansion is directly grown on the surface of silicon, a silicon oxide compound, and magnesium silicate. In addition, the coating of a carbon layer may reduce the chance that silicon directly meets the electrolyte, thereby reducing the formation of a solid electrolyte interphase layer.

As the core of the silicon-silicon complex oxide-carbon composite is immobilized by the shell of a graphene-containing material in this way, it is possible to suppress structural collapse due to volume expansion of silicon, a silicon oxide compound, and magnesium silicate even if a binder is not used in the preparation of a negative electrode active material composition, and it can be advantageously used in the manufacture of an electrode and a lithium secondary battery having excellent electrical conductivity and capacity characteristics by minimizing an increase in resistance.

In the method for preparing the present composite, the fifth step may comprise subjecting the composite having a core-shell structure to at least one step of pulverization and classification to obtain a silicon-silicon complex oxide-carbon composite (composite C).

According to an embodiment of the present invention, the composite having a core-shell structure is subjected to pulverization and/or classification to achieve the particle size distribution desired in the present invention.

In the fifth step, the composite having a core-shell structure may be classified. Alternatively, the composite having a core-shell structure may be pulverized. Alternatively, the composite having a core-shell structure may be pulverized and classified. Specifically, the composite having a core-shell structure may be classified and, if necessary, pulverized.

The pulverization and classification may be used in the same manner as the pulverization and classification used in the third step.

In addition, the silicon-silicon complex oxide-carbon composite may be pulverized and/or classified to have an average particle diameter of 0.5 μm to 10 μm, specifically, 3.0 μm to 8.0 μm, more specifically, 3.0 μm to 7.0 μm.

In the present invention, the span value of Equation 1 may be controlled to the range of 0.6 to 1.5 through the pulverization and/or classification step. In addition, D50, D10, and D90 of the silicon-silicon complex oxide-carbon composite may be controlled to optimal ranges. In addition, it is preferable to reduce fine particles and coarse particles with a classifier or sieve after the pulverization.

**Negative electrode active material**

The negative electrode active material according to an embodiment may comprise the silicon-silicon complex oxide-carbon composite. Specifically, the negative electrode active material comprises a silicon-silicon complex oxide-carbon composite having a core-shell structure, wherein the core comprises silicon, a silicon oxide compound, and magnesium silicate, the shell comprises a carbon layer, and when the particle size at which the cumulative volume concentration (%) in a particle size distribution is 10%, 50%, and 90% is D10, D50, and D90, respectively, the span value of the above Equation 1 of the composite is 0.6 to 1.5.

In addition, the negative electrode active material may further comprise a carbon-based negative electrode material, specifically, a graphite-based negative electrode material.

The negative electrode active material may be used as a mixture of the silicon-silicon complex oxide-carbon composite and the carbon-based negative electrode material, for example, a graphite-based negative electrode material. In such an event, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The silicon-silicon complex oxide-carbon composite may be employed in an amount of 5% by weight to 90% by weight, specifically, 20% by weight to 60% by weight, more specifically, 30% by weight to 50% by weight, based on the total weight of the negative electrode active material.

In addition, the carbon-based negative electrode material may be employed in an amount of 30% by weight to 90% by weight, specifically, 40% by weight to 80% by weight, more specifically, 50% by weight to 80% by weight, based on the total weight of the negative electrode active material.

**Secondary battery**

According to an embodiment of the present invention, the present invention may provide a negative electrode comprising the negative electrode active material and a secondary battery comprising the same.

The secondary battery may comprise a positive electrode, a negative electrode, a separator interposed between the positive electrode and the negative electrode, and a non-aqueous liquid electrolyte in which a lithium salt is dissolved. The negative electrode may comprise a negative electrode active material comprising a silicon-silicon complex oxide-carbon composite.

The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may further comprise a conductive material and a binder.

Materials known in the field may be used as the material constituting the negative electrode current collector and the material constituting the positive electrode current collector. Materials known in the field may be used as the binder and the conductive material added to the negative electrode and the positive electrode.

If the negative electrode is composed of a current collector and an active material layer supported thereon, the negative electrode may be prepared by coating the negative electrode active material composition comprising the silicon-silicon complex oxide-carbon composite on the surface of the current collector and drying it.

In addition, the secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as a non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The secondary battery may comprise a non-aqueous secondary battery.

The negative electrode active material and the secondary battery using the silicon-silicon complex oxide-carbon composite may enhance the capacity, initial charge and discharge efficiency, and capacity retention rate thereof.

**Mode for Carrying out the Invention**

Hereinafter, the present invention will be described in detail with reference to examples. The following examples are only illustrative of the present invention, and the scope of the present invention is not limited thereto.

<Example 1>

**Preparation of a silicon-silicon complex oxide-carbon composite**

Step 1: 11 kg of a silicon powder having an average particle diameter of 20 $\mu$m and 15 kg of a silicon dioxide powder having an average particle diameter of 20 nm were added to 60 kg of water, stirred with a PL mixer for 12 hours for homogeneous mixing thereof, and then dried at 250°C for 20 hours under a nitrogen atmosphere. Thereafter, the resultant was dried again at 600°C for 12 hours to form a raw material powder mixture (raw material).

Step 2: The raw material powder mixture and 3 kg of metallic magnesium were put into crucible-A and crucible-B in a vacuum reactor, respectively. After the pressure was lowered to reach 0.01 Torr, the temperature of crucible-A was raised to 1,400°C, and the temperature of crucible-B was raised to 700°C, followed by a reaction for 5 hours and deposition on a deposition substrate in the reactor. The deposited substrate was rapidly cooled to room temperature by water cooling to obtain a silicon-silicon composite oxide composite (composite A1) as a core.

Step 3: The silicon-silicon composite oxide composite (composite A1) was pulverized once in a jet mill (Nets) under the conditions of an air pressure of 7.5 bar, a classifier rotation speed of 1,300 rpm, and a feeder speed of 216 rpm and recovered with a cyclone. A silicon-silicon composite oxide composite powder (composite B1) having a D10 of 3.2 $\mu$m, a D50 of 6.0 $\mu$m, and a D90 of 9.5 $\mu$m of the recovered pulverized product was obtained.

Step 4: The silicon-silicon composite oxide composite powder (composite B1) was placed in an electric furnace. The pressure was reduced to 0.2 Torr with a rotary vacuum pump. Then, argon gas flowed at a flow rate of 0.3 liter/minute to reach normal pressure. Upon reaching normal pressure, the temperature in the electric furnace was raised to 1,000°C at a rate of 200°C/hr. Upon reaching 1,000°C, carbon coating treatment was carried out for 10 hours while methane gas was injected into the electric furnace at a flow rate of 0.3 liter/minute. After the supply of methane gas was stopped, the inside of the electric furnace was cooled to room temperature to obtain a composite having a core-shell structure with an average particle diameter of 6.7 $\mu$m.

Step 5: The composite of a core-shell structure was passed through a vibrating filter equipped with a 420-mesh sieve to obtain a final silicon-silicon complex oxide-carbon composite (composite C1) with a controlled particle size distribution of a D10 of 3.85 $\mu$m, a D50 of 5.96 $\mu$m, and a D90 of 9.08 $\mu$m.

**Manufacture of a secondary battery**

A negative electrode and a battery (coin cell) comprising the silicon-silicon complex oxide-carbon composite (composite C1) with a controlled particle size distribution as a negative electrode active material were prepared.

The negative electrode active material, Super-P as a conductive material, and polyacrylic acid were mixed at a weight ratio of 80:10:10 with water to prepare a negative electrode active material composition having a solids content of 45%.

The negative electrode active material composition was applied to a copper foil having a thickness of 18 $\mu$m and dried to prepare an electrode having a thickness of 70 $\mu$m. The copper foil coated with the electrode was punched in a circular shape having a diameter of 14 mm to prepare a negative electrode plate for a coin cell.

Meanwhile, a metallic lithium foil having a thickness of 0.3 mm was used as a positive electrode plate.

A porous polyethylene sheet having a thickness of 25 $\mu$m was used as a separator. A liquid electrolyte in which $LiPF_6$ had been dissolved at a concentration of 1 M in a mixed solvent of ethylene carbonate (EC) and diethylene carbonate (DEC) at a volume ratio of 1:1 was used as an electrolyte. The above components were employed to manufacture a coin cell (battery) having a thickness of 3.2 mm and a diameter of 20 mm.

<Example 2>

A silicon-silicon complex oxide-carbon composite and a secondary battery were prepared in the same manner as in Example 1, except that the composite C1 in step 5 of Example 1 was classified once using an air classifier (TC model, Nissin) under the conditions of a blower flow rate of 4.5 m$^3$/minute and a rotor speed of 3,000 rpm and recovered by a cyclone to prepare a silicon-silicon complex oxide-carbon composite (composite C2) having a particle size distribution shown in Table 1.

<Example 3>

A silicon-silicon complex oxide-carbon composite and a secondary battery were prepared in the same manner as in Example 1, except that the composite C1 in step 5 of Example 1 was classified once using an air classifier (TC model, Nissin) under the conditions of a blower flow rate of 4.7 m$^3$/minute and a rotor speed of 6,500 rpm and recovered by a cyclone to prepare a silicon-silicon complex oxide-carbon composite (composite C3) having a particle size distribution shown in Table 1.

<Example 4>

A silicon-silicon complex oxide-carbon composite and a secondary battery were prepared in the same manner as in Example 1, except that the composite C1 in step 5 of Example 1 was classified once using an air classifier (TC model, Nissin) under the conditions of a blower flow rate of 4.2 m$^3$/minute and a rotor speed of 4,000 rpm and recovered by a cyclone to prepare a silicon-silicon complex oxide-carbon composite (composite C4) having a particle size distribution shown in Table 1.

<Example 5>

A silicon-silicon complex oxide-carbon composite and a secondary battery were prepared in the same manner as in Example 1, except that the composite C1 in step 5 of Example 1 was classified once using an air classifier (TC model, Nissin) under the conditions of a blower flow rate of 6.5 m$^3$/minute and a rotor speed of 6,500 rpm and recovered by a cyclone to prepare a silicon-silicon complex oxide-carbon composite (composite C5) having a particle size distribution shown in Table 1.

<Example 6>

A silicon-silicon complex oxide-carbon composite (composite C6) having a particle size distribution shown in Table 1 and a secondary battery were prepared in the same manner as in Example 1, except that the pulverization in step 3 of Example 1 was carried out twice to prepare a silicon-silicon composite oxide composite powder (composite B2) having an average particle diameter of about 4.9 μm.

<Example 7>

A silicon-silicon complex oxide-carbon composite (composite C7) having a particle size distribution shown in Table 1 and a secondary battery were prepared in the same manner as in Example 1, except that the pulverization in step 3 of Example 1 was carried out three times to prepare a silicon-silicon composite oxide composite powder (composite B3) having an average particle diameter of about 1.9 μm.

<Example 8>

A silicon-silicon complex oxide-carbon composite (composite C8) having a particle size distribution shown in Table 1 and a secondary battery were prepared in the same manner as in Example 1, except that the silicon-silicon composite oxide composite (composite A1) in step 3 of Example 1 was pulverized once in a jet mill (small size, Daega Powder) under the conditions of an air pressure of 8.0 bar, a classifier rotation speed of 2,200 rpm, and a feeder speed of 600 rpm and recovered with a cyclone to prepare a silicon-silicon composite oxide composite powder (composite B4) having an average particle diameter of 6.3 μm.

<Example 9>

A silicon-silicon complex oxide-carbon composite (composite C9) having a particle size distribution shown in Table 1 and a secondary battery were prepared in the same manner as in Example 1, except that a SiO$_x$ (x = 1.08) compound was used instead of the raw material powder mixture in step 1 of Example 1.

<Example 10>

A silicon-silicon complex oxide-carbon composite (composite C10) having a particle size distribution shown in Table 1 and a secondary battery were prepared in the same manner as in Example 1, except that carbon coating treatment in step 4 of Example 1 was carried out through a stirred reaction at 0.1 rpm for 10 hours while methane flowed at 0.3 liter/minute in the electric furnace.

<Comparative Example 1>

A silicon-silicon complex oxide-carbon composite having a particle size distribution shown in Table 1 and a secondary battery were prepared in the same manner as in Example 1, except that the silicon-silicon composite oxide composite (composite A1) in step 3 of Example 1 was pulverized in a jet mill (small size, Daega Powder) at an air pressure of 0.58 MPa to prepare a silicon-silicon composite oxide composite powder (composite B5) having an average particle diameter of 12.8 $\mu$m of the pulverized product.

<Comparative Example 2>

A silicon-silicon complex oxide-carbon composite having a particle size distribution shown in Table 1 and a secondary battery were prepared in the same manner as in Example 1, except that metallic magnesium was not used in step 2 of Example 1 and the $SiO_x$ (x = 1.02) obtained in step 2 was pulverized in step 3 with a ball mill to obtain a composite powder having an average particle size of 3.7 $\mu$m.

<Comparative Example 3>

A composite having a particle size distribution shown in Table 1 and a secondary battery were prepared in the same manner as in Comparative Example 1, except that the silicon-silicon composite oxide composite (composite A1) was classified in step 3 of Example 1 with an air stream classifier at an air flow rate of 2.5 $Nm^3$/minute and a rotor rotation speed of 10,000 rpm without pulverization by a jet mill and that steps 4 and 5 were not carried out.

**Test Example**

**Test Example 1: Measurement of the particle diameter of final composites**

0.2 g of the final composite particles prepared in the Examples and Comparative Examples was dispersed in 10 ml of ethanol, which was subjected to ultrasonication treatment for 3 minutes. The particle size was then measured using S3500 equipment of Microtrac. D10, D50, and D90 of the analyzed values were measured as the particle diameter (D10) when the cumulative volume concentration (%) was 10%, the particle diameter (D50) when the cumulative volume concentration (%) was 50%, and the particle diameter (D90) when the cumulative volume concentration (%) was 90%, respectively, in the particle size distribution measurement by a laser light diffraction method.

Fig. 1 is a graph showing the result of measuring the particle size distribution of the silicon-silicon complex oxide-carbon composite of Example 1. It shows the cumulative volume concentration (%) and volume concentration (%) with respect to the particle size of the silicon-silicon complex oxide-carbon composite.

As shown in Fig. 1, in Example 1, D10 was 3.85 $\mu$m, D50 was 5.96 $\mu$m, and D90 was 9.08 $\mu$m.

**Test Example 2: Measurement of the specific surface area of final composites**

The composites prepared in the Examples and Comparative Examples were each degassed at 350°C for 2 hours. The specific surface area thereof was measured with Macsorb HM (model 1210) of MOUNTECH by the BET one-point method with a flow of a mixed gas of nitrogen and helium ($N_2$: 30% by volume and He: 70% by volume).

**Test Example 3: Measurement of the electrical conductivity of final composites**

Gold (Au) was deposited to a thickness of 100 nm in an atmosphere of 100 W and argon (Ar) using a hard mask on the upper and lower portions of the composites prepared in the Examples and Comparative Examples to obtain a cell. The ionic conductivity at 25°C was measured from the response obtained by applying alternating current with two blocking electrodes using an impedance analyzer (Zahner, IM6).

**Test Example 4: Analysis of the content and specific gravity of the component elements of final composites**

The content of each component element of magnesium (Mg), oxygen (O), and carbon (C) in the composites prepared in the Examples and Comparative Examples were analyzed.

The content of magnesium (Mg) was analyzed by inductively coupled plasma (ICP) emission spectroscopy. The contents of oxygen (O) and carbon (C) were measured by an elemental analyzer, respectively.

0.4 g of the prepared composite was placed in a 10-ml container and measured for the specific gravity (particle density) using Accupyc II of Micromeritics.

**Test Example 5: Measurement of the capacity, initial efficiency, and capacity retention rate of secondary batteries**

The coin cells (secondary batteries) prepared in the Examples and Comparative Examples were each charged at a constant current of 0.1 C until the voltage reached 0.005 V and discharged at a constant current of 0.1 C until the voltage reached 2.0 V to measure the charge capacity (mAh/g), discharge capacity (mAh/g), and initial efficiency (%) according to the following Equation 2. The results are shown in Table 1 below.

[Equation 2]

$$\text{Initial efficiency (\%)} = \text{discharge capacity/charge capacity} \times 100$$

In addition, the coin cells prepared in the Examples and Comparative Examples were each charged and discharged once in the same manner as above and, from the second cycle, charged at a constant current of 0.5 C until the voltage reached 0.005 V and discharged at a constant current of 0.5 C until the voltage reached 2.0 V to measure the cycle characteristics (capacity retention rate upon 100 cycles, %) according to the following Equation 3. The results are shown in Table 1 below.

[Equation 3]

$$\text{Capacity retention rate upon 100 cycles (\%)} = 101^{st} \text{ discharge capacity/}2^{nd} \text{ discharge capacity} \times 100$$

[Table 1]

| Lot | | Ex. 1 | Ex. 2 | Ex. 3 | Ex. 4 | Ex. 5 | Ex. 6 | Ex. 7 | Ex. 8 | Ex. 9 | Ex. 10 | C. Ex. 1 | C. Ex. 2 | C. Ex. 3 |
|---|---|---|---|---|---|---|---|---|---|---|---|---|---|---|
| PSA (vol%) | Dmin (μm) (0.01) | 1.96 | 1.78 | 1.5 | 1.64 | 1.65 | 1.95 | 0.29 | 0.58 | 2.12 | 1.5 | 1.16 | 0.63 | 2.12 |
| | D10 (μm) | 3.85 | 3.35 | 3.34 | 2.82 | 2.94 | 3.27 | 0.78 | 3.14 | 3.89 | 3.41 | 1.32 | 1.99 | 4.69 |
| | D50 (μm) | 5.96 | 5.21 | 5.64 | 4.15 | 4.14 | 4.91 | 1.94 | 6.25 | 6.33 | 5.94 | 6.67 | 3.68 | 13.08 |
| | D90 (μm) | 9.08 | 8.09 | 7.17 | 6.19 | 5.96 | 7.38 | 3.18 | 10.12 | 9.82 | 9.41 | 15.04 | 7.83 | 26.61 |
| | Dmax (μm) | 18.36 | 15.48 | 15.47 | 10.95 | 10.93 | 13.03 | 7.45 | 21.86 | 18.41 | 18.41 | 25.97 | 21.85 | 86.8 |
| Span: (D90 - D10)/D50 | | 0.88 | 0.91 | 0.68 | 0.81 | 0.73 | 0.84 | 1.24 | 1.12 | 0.94 | 1.01 | 2.06 | 1.59 | 1.68 |
| D90/D10 | | 2.36 | 2.41 | 2.15 | 2.20 | 2.03 | 2.26 | 4.08 | 3.22 | 2.52 | 2.76 | 11.39 | 3.93 | 5.67 |
| (Dmax - Dmin)/D50 | | 2.75 | 2.63 | 2.48 | 2.24 | 2.24 | 2.26 | 3.69 | 3.40 | 2.57 | 2.85 | 3.72 | 5.77 | 6.47 |
| Carbon content (% by weight) | | 5 | 4.8 | 4.2 | 5.1 | 3.9 | 4.1 | 3.1 | 3.2 | 4.8 | 4.8 | 5.1 | 4.8 | 0 |
| BET (m²/g) | | 8 | 8.1 | 7 | 10.3 | 9.8 | 10.9 | 24.1 | 13.2 | 8.6 | 8.5 | 10.2 | 12.9 | 4.3 |
| Particle density (g/cc) | | 2.23 | 2.22 | 2.27 | 2.05 | 2.11 | 2.14 | 1.76 | 2.17 | 2.18 | 2.23 | 2.23 | 2.14 | 2.16 |
| Electrical conductivity (S/cm) | | 1.89 | 1.78 | 1.41 | 1.99 | 1.36 | 1.38 | 1.02 | 0.9 | 1.81 | 1.8 | 1.9 | 1.92 | 1.86 |
| Initial efficiency (%) | | 79.6 | 79.5 | 79.3 | 79 | 78.8 | 79.1 | 78.7 | 78.5 | 79.6 | 79.6 | 78 | 75.4 | 77.2 |
| Initial capacity (mAh/g) | | 1424 | 1446 | 1410 | 1403 | 1395 | 1410 | 1380 | 1367 | 1424 | 1424 | 1358 | 1402 | 1323 |
| Capacity retention rate (%) upon 100 cycles | | 90 | 92.5 | 88 | 89 | 93.5 | 93.1 | 94.3 | 96.1 | 90 | 90 | 87 | 85 | 75.3 |

As can be seen from Table 1, the secondary batteries prepared using the silicon-silicon complex oxide-carbon composites with a controlled particle size distribution in Examples 1 to 10 of the present invention were significantly enhanced in initial efficiency, initial capacity, and cycle characteristics (lifespan characteristics) as compared with Comparative Examples 1 to 3.

Specifically, in all the composites of Examples 1 to 10, the span values of Equation 1 satisfied 0.6 to 1.5. The secondary batteries produced using the same were overall excellent in initial capacity, ranging from 1,400 mAh/g to 1,424 mAh/g, and had an initial efficiency of 78.5% or more. In particular, most of the capacity retention rates upon 100 cycles were 90% or more.

In contrast, all the composites of Comparative Examples 1 to 3 had a span value of Equation 1 exceeding 1.5, falling outside the range of span values desired in the present invention. Specifically, the secondary battery of Comparative Example 1 using the composite having a span value exceeding 2 had a very low initial capacity of 1,358 mAh/g. The secondary battery of Comparative Example 2 using a composite comprising no magnesium and having a span value of 1.59 had a significantly low initial efficiency of 75.4%. The secondary battery of Comparative Example 3 comprising no carbon layer and had a span value of 1.68 was significantly reduced in lifespan characteristics, initial capacity, and initial efficiency as compared with the secondary batteries of the Examples.

**Claims**

1. A silicon-silicon complex oxide-carbon composite having a core-shell structure, wherein the core comprises silicon, a silicon oxide compound, and magnesium silicate, the shell comprises a carbon layer, and when the particle size at which the cumulative volume concentration (%) in a particle size distribution is 10%, 50%, and 90% is D10, D50, and D90, respectively, the span value of the following Equation 1 of the composite is 0.6 to 1.5:

$$[\text{Equation 1}]$$
$$\text{Span} = (D90 - D10)/D50.$$

2. The silicon-silicon complex oxide-carbon composite of claim 1, wherein the composite has a D50 of 0.5 $\mu$m to 10.0 $\mu$m.

3. The silicon-silicon complex oxide-carbon composite of claim 1, wherein the composite has a D10 of 0.7 $\mu$m to 4.0 $\mu$m and a D90 of 3.0 $\mu$m to 12.0 $\mu$m.

4. The silicon-silicon complex oxide-carbon composite of claim 1, wherein the composite has a D90/D10 of 1.0 to 5.0.

5. The silicon-silicon complex oxide-carbon composite of claim 1, wherein the silicon is in an amorphous form, a crystalline form having a crystallite size of 2 nm to 20 nm, or a mixture thereof.

6. The silicon-silicon complex oxide-carbon composite of claim 1, wherein the content of silicon (Si) in the core is 30% by weight to 80% by weight based on the total weight of the silicon-silicon complex oxide-carbon composite.

7. The silicon-silicon complex oxide-carbon composite of claim 1, wherein the ratio of the number of oxygen atoms to the number of silicon atoms (O/Si) present in the silicon-silicon complex oxide-carbon composite is 0.45 to 1.2.

8. The silicon-silicon complex oxide-carbon composite of claim 1, wherein the silicon oxide compound is $SiO_x$ ($0.5 \leq x \leq 1.5$).

9. The silicon-silicon complex oxide-carbon composite of claim 1, wherein the content of magnesium (Mg) in the silicon-silicon complex oxide-carbon composite is 2% by weight to 15% by weight based on the total weight of the silicon-silicon complex oxide-carbon composite.

10. The silicon-silicon complex oxide-carbon composite of claim 1, wherein, in an X-ray diffraction analysis of the magnesium silicate, the ratio IF/IE of an intensity (IF) of the X-ray diffraction peak corresponding to $Mg_2SiO_4$ crystals appearing in the range of $2\theta = 22.3°$ to $23.3°$ to an intensity (IE) of the X-ray diffraction peak corresponding to $MgSiO_3$ crystals appearing in the range of $2\theta = 30.5°$ to $31.5°$ is greater than 0 to 1.

11. The silicon-silicon complex oxide-carbon composite of claim 1, wherein the carbon layer comprises at least one selected from the group consisting of graphene, reduced graphene oxide, a carbon nanotube, and a carbon nanofiber.

**12.** The silicon-silicon complex oxide-carbon composite of claim 11, wherein the carbon layer further comprises graphite.

**13.** The silicon-silicon complex oxide-carbon composite of claim 1, wherein the content of carbon (C) in the carbon layer is 2% by weight to 30% by weight based on the total weight of the silicon-silicon complex oxide-carbon composite.

**14.** The silicon-silicon complex oxide-carbon composite of claim 1, wherein the carbon layer has a thickness of 1 nm to 300 nm.

**15.** The silicon-silicon complex oxide-carbon composite of claim 1, wherein the silicon-silicon complex oxide-carbon composite has a specific gravity of 1.7 $g/cm^3$ to 2.6 $g/cm^3$ and a specific surface area (Brunauer-Emmett-Teller; BET) of 3 $m^2/g$ to 30 $m^2/g$.

**16.** A method for preparing the silicon-silicon complex oxide-carbon composite of claim 1, which comprises:

a first step of preparing a raw material obtained by using a silicon powder and a silicon oxide ($SiO_x$, $0.5 \leq x \leq 2$) powder;
a second step of heating and evaporating the raw material and metallic magnesium at different temperatures, followed by deposition and cooling thereof to obtain a silicon-silicon composite oxide composite as a core;
a third step of pulverizing and classifying the silicon-silicon composite oxide composite to an average particle diameter of 0.5 $\mu$m to 10 $\mu$m to obtain a silicon-silicon composite oxide composite powder;
a fourth step of forming a carbon layer on the surface of the silicon-silicon composite oxide composite powder by using a chemical thermal decomposition deposition method to obtain a composite having a core-shell structure; and
a fifth step of subjecting the composite having a core-shell structure to at least one step of pulverization and classification to obtain a silicon-silicon complex oxide-carbon composite.

**17.** The method for preparing the silicon-silicon complex oxide-carbon composite according to claim 16, wherein the raw material is a mixture obtained by mixing a silicon powder and a silicon oxide powder; or a compound obtained by heating the mixture and cooling and precipitating the gas produced thereby; or a blend of the mixture and the compound.

**18.** The method for preparing the silicon-silicon complex oxide-carbon composite according to claim 17, wherein, in the blend of the mixture and the compound, the compound is further added in an amount of 20% by weight to less than 100% by weight based on the total weight of the blend.

**19.** The method for preparing the silicon-silicon complex oxide-carbon composite according to claim 17, wherein the silicon powder has an average particle diameter of 5 $\mu$m to 50 $\mu$m, and the silicon oxide powder has an average particle diameter of 5 nm to 50 nm.

**20.** The method for preparing the silicon-silicon complex oxide-carbon composite according to claim 16, wherein the raw material has a molar ratio of the oxygen element per mole of the silicon element being 0.8 to 1.2.

**21.** The method for preparing the silicon-silicon complex oxide-carbon composite according to claim 16, wherein the heating and evaporation of the raw material in the second step is carried out at 900°C to 1,800°C under a pressure of 0.0001 Torr to 2 Torr, and the heating and evaporation of the metallic magnesium in the second step is carried out at 500°C to 1,100°C under a pressure of 0.0001 Torr to 2 Torr.

**22.** The method for preparing the silicon-silicon complex oxide-carbon composite according to claim 16, wherein the formation of the carbon layer in the fourth step is carried out by injecting at least one selected from a compound represented by the following Formulae 2 to 4 and carrying out a reaction in a gaseous state at 600°C to 1,200°C:

[Formula 2] $\quad C_NH_{(2N + 2-A)}[OH]_A$

in Formula 2, N is an integer of 1 to 20, and A is 0 or 1,

[Formula 3] $\quad C_NH_{(2N-B)}$

in Formula 3, N is an integer of 2 to 6, and B is 0 to 2,

$$[Formula\ 4] \qquad C_xH_yO_z$$

in Formula 4, x is an integer of 1 to 20, y is an integer of 0 to 25, and z is an integer of 0 to 5.

23. The method for preparing the silicon-silicon complex oxide-carbon composite according to claim 16, wherein, in the third step, the pulverization is carried out using at least one selected from the group consisting of a jet mill, a ball mill, a stirred media mill, a roll mill, a hammer mill, a pin mill, a disk mill, a colloid mill, and an atomizer mill, and the classification is carried out using at least one selected from dry classification, wet classification, and sieve classification.

24. A negative electrode active material, which comprises the silicon-silicon complex oxide-carbon composite of claim 1.

25. The negative electrode active material of claim 24, wherein the negative electrode active material further comprises a carbon-based negative electrode material.

26. The negative electrode active material of claim 24, wherein the silicon-silicon complex oxide-carbon composite is employed in an amount of 5% by weight to 90% by weight based on the total weight of the negative electrode active material.

27. A lithium secondary battery, which comprises the negative electrode active material of claim 24.

[Fig. 1]

## INTERNATIONAL SEARCH REPORT

| International application No. |
|---|
| **PCT/KR2021/000734** |

### A. CLASSIFICATION OF SUBJECT MATTER

**H01M 4/36**(2006.01)i; **H01M 4/38**(2006.01)i; **H01M 4/48**(2010.01)i; **H01M 4/587**(2010.01)i; **H01M 4/62**(2006.01)i; **H01M 10/052**(2010.01)i; **C01B 33/02**(2006.01)i; **C01B 33/113**(2006.01)i

According to International Patent Classification (IPC) or to both national classification and IPC

### B. FIELDS SEARCHED

Minimum documentation searched (classification system followed by classification symbols)

H01M 4/36(2006.01); C01B 32/05(2017.01); C01B 32/182(2017.01); H01M 10/0525(2010.01); H01M 4/134(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코어-쉘(core-shell), 규소(silicon), 산화 규소(silicon oxide), 규산 마그네슘 (magnesium silicate), 탄소층(carbon layer), 입도 분포(particle size distribution), 음극 활물질(anode active material), 리튬 이 차전지(lithium secondary battery)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0031566 A (SAMSUNG ELECTRONICS CO., LTD. et al.) 28 March 2018 (2018-03-28) See paragraphs [0044], [0122] and [0123]; claims 1, 14 and 15; and table 10. | 1-27 |
| Y | KR 10-2019-0093176 A (LG CHEM, LTD.) 08 August 2019 (2019-08-08) See paragraphs [0001] and [0057]; example 1; and claim 1. | 1-27 |
| Y | KR 10-2015-0079603 A (HITACHI CHEMICAL COMPANY, LTD.) 08 July 2015 (2015-07-08) See paragraphs [0055], [0057], [0060] and [0061]. | 16-23 |
| A | KR 10-2019-0065182 A (DAE JOO ELECTRONIC MATERIALS CO., LTD.) 11 June 2019 (2019-06-11) See entire document. | 1-27 |
| A | KR 10-2019-0117633 A (WACKER CHEMIE AG) 16 October 2019 (2019-10-16) See entire document. | 1-27 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **21 April 2021** | **21 April 2021** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/000734**

| Patent document cited in search report | | | Publication date (day/month/year) | Patent family member(s) | | | Publication date (day/month/year) |
|---|---|---|---|---|---|---|---|
| KR | 10-2018-0031566 | A | 28 March 2018 | JP | 2018-048070 | A | 29 March 2018 |
| | | | | KR | 10-2018-0031585 | A | 28 March 2018 |
| | | | | US | 10622624 | B2 | 14 April 2020 |
| | | | | US | 2018-0083272 | A1 | 22 March 2018 |
| KR | 10-2019-0093176 | A | 08 August 2019 | JP | 2020-529709 | A | 08 October 2020 |
| | | | | WO | 2019-151813 | A1 | 08 August 2019 |
| KR | 10-2015-0079603 | A | 08 July 2015 | JP | 2018-160460 | A | 11 October 2018 |
| | | | | JP | 2020-113547 | A | 27 July 2020 |
| | | | | JP | 6380106 | B2 | 29 August 2018 |
| | | | | JP | 6683213 | B2 | 15 April 2020 |
| | | | | KR | 10-2020-0129176 | A | 17 November 2020 |
| | | | | US | 10892482 | B2 | 12 January 2021 |
| | | | | US | 2015-0270540 | A1 | 24 September 2015 |
| | | | | WO | 2014-065418 | A1 | 01 May 2014 |
| KR | 10-2019-0065182 | A | 11 June 2019 | JP | 2021-504918 | A | 15 February 2021 |
| | | | | KR | 10-2185490 | B1 | 02 December 2020 |
| | | | | WO | 2019-108050 | A1 | 06 June 2019 |
| KR | 10-2019-0117633 | A | 16 October 2019 | JP | 2020-507547 | A | 12 March 2020 |
| | | | | US | 2020-0006759 | A1 | 02 January 2020 |
| | | | | WO | 2018-145765 | A1 | 16 August 2018 |

Form PCT/ISA/210 (patent family annex) (July 2019)

**EP 4 095 947 A1**

**Patent documents cited in the description**

- JP 2002042806 A
- JP 5406799 B
- JP 2014067713 A
- JP 2013041826 A
- JP 2015164139 A